# EUROPEAN PATENT SPECIFICATION

(11) **EP 3 636 953 B1**
(45) Date of publication and mention of the grant of the patent: **27.09.2023**
(21) Application number: 19193903.2
(22) Date of filing: 31.05.2012
(51) Int. Cl.: F16F 9/48, F16F 9/46, F16F 9/342, B62K 25/06, B62K 25/08, F16F 9/34, B60G 17/08, B62K 25/04

(54) **APPARATUS FOR POSITION SENSITIVE AND/OR ADJUSTABLE SUSPENSION DAMPING**
VORRICHTUNG ZUR POSITIONSEMPFINDLICHEN UND/ODER EINSTELLBAREN AUFHÄNGUNGSDÄMPFUNG
APPAREIL POUR AMORTISSEMENT DE SUSPENSION SENSIBLE AU POSITIONNEMENT ET/OU RÉGLABLE

(30) Priority: 31.05.2011 US 201161491858 P; 10.05.2012 US 201261645465 P
(43) Date of publication of application: 15.04.2020
(62) Divisional of application: 12170370.6
(73) Proprietor: Fox Factory, Inc., Scotts Valley, CA 95066 (US)
(72) Inventor: ERICKSEN, Everet Owen, Santa Cruz, CA 95062 (US); COX, Christopher Paul, Capitola, CA 95010 (US); PELOT, Sante, Santa Cruz, CA 95062 (US); HAUGEN, David M., Pacific Grove, CA 93950 (US)
(74) Representative: Lucas, Brian Ronald

(56) References cited:
- EP-A2- 1 050 696
- DE-A1- 3 241 901
- GB-A- 2 159 604
- GB-A- 2 190 461
- KR-U- 19980 043 226
- US-A- 5 127 634

## Description

### BACKGROUND OF THE INVENTION

### Field of the Invention

The invention relates generally to a vehicle suspension damper and a vehicle comprising a vehicle damper. The vehicle suspension damper may provide variable damping rates in vehicle shock absorbers and forks.

### Description of the Related Art

Vehicle suspension systems typically include a spring component or components and a damping component or components. Often, mechanical springs, like helical springs, are used with some type of viscous fluid-based damping mechanism, the spring and damper being mounted functionally in parallel. In some instances a spring may comprise pressurized gas and features of the damper or spring are user-adjustable, such as by adjusting the air pressure in a gas spring. A damper may be constructed by placing a damping piston in a fluid-filled cylinder (e.g., liquid such as oil). As the damping piston is moved in the cylinder, fluid is compressed and passes from one side of the piston to the other side. Often, the piston includes vents there-through which may be covered by shim stacks to provide for different operational characteristics in compression or extension.

Conventional damping components provide a constant damping rate during compression or extension through the entire length of the stroke. As the suspension component nears full compression or full extension, the damping piston can "bottom out" against the end of the damping cylinder. Allowing the damping components to "bottom out" may cause the components to deform or break inside the damping cylinder.

As the foregoing illustrates, what is needed in the art are improved techniques for varying the damping rate including to lessen the risk of the suspension "bottoming out."

DE-A1 -32 41 901 appears to disclose damper having a blind bore in a piston. The blind bore defines a pressure chamber through which a plunger moves as the damper is compressed. A socket is provided in the blind bore having an immersion opening which has a fluid tight fit with the plunger passing through it. It appears that as the damper is compressed, hydraulic fluid is compressed in the bind bore and any displaced hydraulic fluid passes between bore and socket shaft and through connection channels into the cylinder. Any change in volume in cylinder is compensated for by an accumulator. The plunger also has an extension piece matched in terms of its dimensions to a recess so that that when immersed in this by the associated displacement of the hydraulic oil a progressive compression damping is achieved. The document KR 1998 0043 226 U discloses also a damper comprising a needle configured to enter a blind bore in a piston. It comprises a valve configure to control the fluid flow from or to the blind bore according to the movement of the needle.

### SUMMARY OF THE INVENTION

In accordance with the present invention, there is provided a vehicle suspension damper comprising: a cylinder containing a piston assembly comprising a piston rod having a piston attached to a first end of the piston rod; a working fluid within the cylinder; a needle fixed to one end of the cylinder and configured to engage a blind bore formed in the first end of the piston rod; and a valve located proximate to the first end of the piston rod and configured to surround the needle when the needle engages the blind bore, wherein the valve is configured to meter fluid forced out of the blind bore by the needle during compression through a clearance between an inner surface of the valve and an outer surface of the needle; wherein a nut is fixed to the first end of the piston rod, wherein the valve is retained within the nut by a retainer clip, the valve having substantial radial clearance between an outer surface of the valve and an inner surface of the nut such that the positioning of the valve may be eccentric compared with the positioning of the needle, wherein the nut comprises a seat and the valve comprises a check valve, the arrangement being such that, in use, during compression when the needle enters the blind bore the check valve is moved, by fluid pressure within the blind bore and flow of working fluid out of blind bore, against the seat of the nut and the bulk of escaping fluid must flow through the clearance thereby dictating a rate at which the needle may further progress into bore, and substantially increasing the damping rate of the damper and wherein the valve is configured to meter fluid entering the blind bore during rebound through a slot machined in a first surface of the valve oriented such that the side with the slot is proximate to an upper face of the valve retainer clip.

Optionally, the first surface of the valve is adjacent the retainer clip to prevent sealing the valve against the retainer clip. Optionally, the valve is radially retained within the nut which has a recess, and the radial clearance is within the recess thereby allowing for eccentricity of the needle relative to the piston rod without causing interference that could deform components of the damper. Optionally, the valve is an annular bushing constructed from a manganese bronze alloy, such as high-strength yellow brass or other material, enabling low friction between the valve and the needle. Optionally, the valve comprises a washer or bushing having an interior diameter sized to provide the clearance between the inner surface of the valve and the outer surface of the needle when the needle passes through the valve. Optionally, the needle is tapered to allow easier entrance of the needle into the blind bore through the valve. Optionally, the piston comprises vented paths for metering working fluid flow from one side of the piston to the other side of the piston. Optionally, the arrangement being such that, in use, when the needle enters the blind bore the fluid flow around the needle and through the valve is restricted significantly more than fluid flow through the vented paths.

The present invention also provides a vehicle comprising a vehicle suspension damper of the invention.

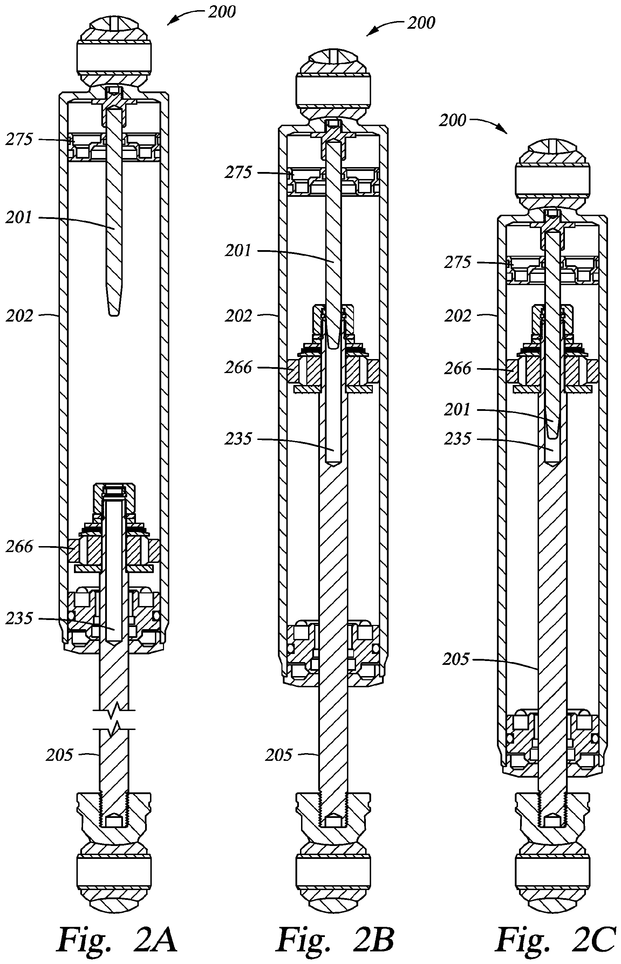

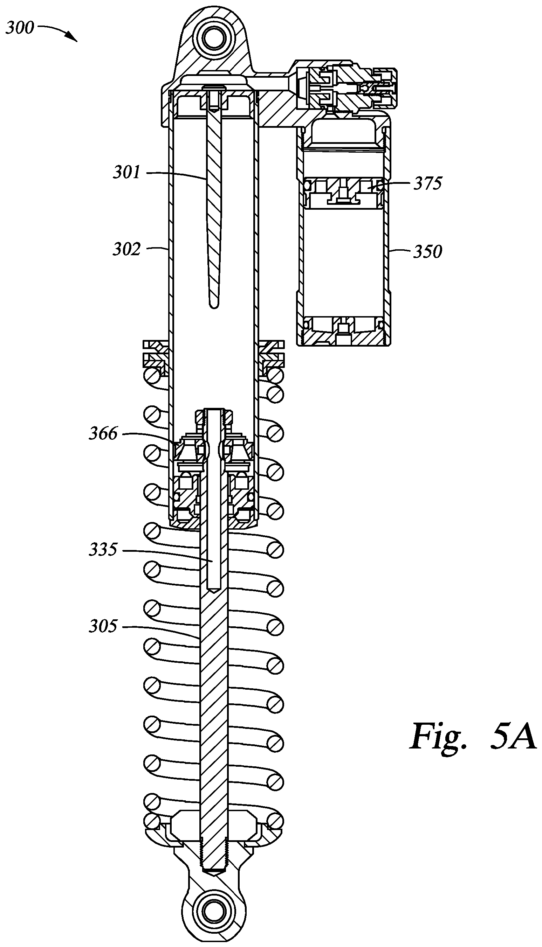

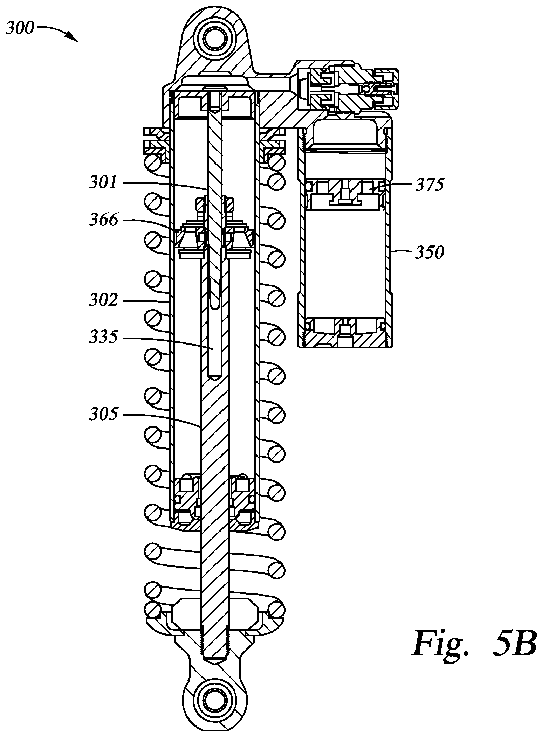

The present application is divided from European Patent Number EP-B-2,530,355 which discloses a vehicle suspension damper comprising:
a cylinder containing damping fluid and a piston assembly comprising a piston, a piston rod, a first fluid path and a second fluid path through the piston assembly for permitting damping fluid to pass from a first side to a second side of the piston during a compression stroke of the vehicle suspension damper; and
a valve member for resisting fluid flow through the second fluid path;
characterized in that
said valve member provides a restriction to fluid flow through the second fluid path, the restriction being independent of the pressure of the damping fluid within the vehicle suspension damper, such pressures caused by compression. In some embodiments, the restriction comprises an orifice or port that can be selectively obstructed and partially obstructed by the valve member. In use, any obstruction or partial obstruction is not affected by pressure of the damping fluid during a compression stroke. For example, partial obstruction may leave an area of the port or orifice open to fluid flow and that area is not affected by pressure changes in the damping fluid during compression of the damper. In one embodiment the vehicle suspension damper may be a monotube-type damper (an example of this type of damper is shown in Figure 2). In another embodiment the vehicle suspension damper is a "piggy-back" or reservoir type damper (an example of that type of damper is shown in Figure 5).

### BRIEF DESCRIPTION OF THE DRAWINGS

So that the manner in which the above recited features can be understood in detail, a more particular description, briefly summarized above, may be had by reference to certain example embodiments, some of which are illustrated in the appended drawings. It is to be noted, however, that the appended drawings illustrate only typical embodiments and are therefore not to be considered limiting the scope of the claims, which may admit to other equally effective embodiments.
Figure 1 shows an asymmetric bicycle fork having a damping leg and a spring leg, according to one example embodiment;
Figures 2A-2C show sectional side elevation views of a needle-type monotube damping unit in different stages of compression, according to one example embodiment;
Figure 3 shows a detailed view of the needle and bore at the intermediate position proximate to the "bottom-out" zone, according to one example embodiment;
Figures 4A and 4B illustrate the castellated or slotted valve, according to one example embodiment;
Figures 5A and 5B illustrate a damping unit having a "piggy back" reservoir, according to one example embodiment;
Figure 6 illustrates a half section, orthographic view of a damping unit, according to another example embodiment;
Figures 7A through 7E illustrate the piston of Figure 6, according to one example embodiment; and
Figures 8A and 8B illustrate the shaft of Figure 6, according to one example embodiment.
Figure 9 illustrates another damping unit having a "piggy back" reservoir, according to one example embodiment.
Figures 10 and 11 illustrate in cross section part of the damping unit of Figure 9 with a control rod in a first position and in a second position respectively.
Figures 12, 13 and 14 illustrate an eyelet assembly portion of the damping unit of Figure 9.
Figure 15 illustrates in schematic perspective a view a damping piston part of the damping unit of Figure 9.
Figure 16 illustrates in schematic perspective view a damping piston, shaft and eyelet assembly parts of the damping unit of Figure 9.
Figure 17 illustrates a detailed section view of the damping unit of Figure 9.
Figure 18 illustrates a schematic side cross section through a monotube damping unit, according to one example embodiment.
Figure 19 illustrates a schematic side cross section of an eyelet part of the monotube damping unit of Figure 18.
Figure 20 illustrates various aspects of another damping unit having a "piggy back" reservoir, according to one example embodiment.

For clarity, identical reference numbers have been used, where applicable, to designate identical elements that are common between figures. It is contemplated that features of one example embodiment may be incorporated in other example embodiments without further recitation.

### DETAILED DESCRIPTION

Integrated damper / spring vehicle shock absorbers often include a damper body surrounded by or used in conjunction with a mechanical spring or constructed in conjunction with an air spring or both. The damper often consists of a piston and shaft telescopically mounted in a fluid filled cylinder. The damping fluid (i.e., damping liquid) or damping liquid may be, for example, hydraulic oil. A mechanical spring may be a helically wound spring that surrounds or is mounted in parallel with the damper body. Vehicle suspension systems typically include one or more dampers as well as one or more springs mounted to one or more vehicle axles. As used herein, the terms "down", "up", "downward", "upward", "lower", "upper", and other directional references are relative and are used for reference only.

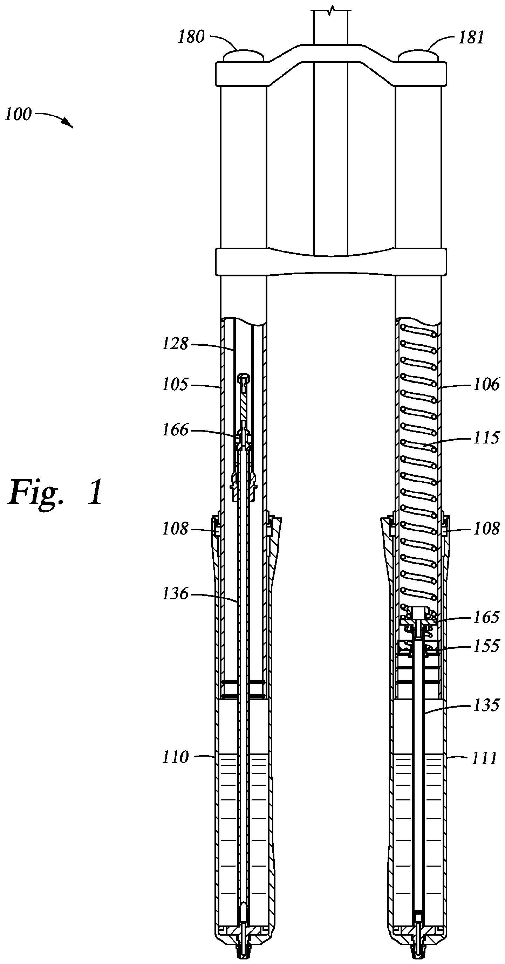

Figure 1 shows an asymmetric bicycle fork 100 having a damping leg and a spring leg, according to one example embodiment. The damping leg includes an upper tube 105 mounted in telescopic engagement with a lower tube 110 and having fluid damping components therein. The spring leg includes an upper tube 106 mounted in telescopic engagement with a lower tube 111 and having spring components therein. The upper legs 105, 106 may be held centralized within the lower legs 110, 111 by an annular bushing 108. The fork 100 may be included as a component of a bicycle such as a mountain bicycle or an off-road vehicle such as an off-road motorcycle. In some embodiments, the fork 100 may be an "upside down" or Motocross-style motorcycle fork.

In one embodiment, the damping components inside the damping leg include an internal piston 166 disposed at an upper end of a damper shaft 136 and fixed relative thereto. The internal piston 166 is mounted in telescopic engagement with a cartridge tube 128 connected to a top cap 180 fixed at one end of the upper tube 105. The interior volume of the damping leg may be filled with a damping liquid such as hydraulic oil. The piston 166 may include shim stacks (i.e., valve members) that allow a damping liquid to flow through vented paths in the piston 166 when the upper tube 105 is moved relative to the lower tube 110. A compression chamber is formed on one side of the piston 166 and a rebound chamber is formed on the other side of the piston 166. The pressure built up in either the compression chamber or the rebound chamber during a compression stroke or a rebound stroke provides a damping force that opposes the motion of the fork 100.

The spring components inside the spring leg include a helically wound spring 115 contained within the upper tube 106 and axially restrained between top cap 181 and a flange 165. The flange 165 is disposed at an upper end of the riser tube 135 and fixed thereto. The lower end of the riser tube 135 is connected to the lower tube 111 in the spring leg and fixed relative thereto. A valve plate 155 is positioned within the upper leg tube 106 and axially fixed thereto such that the plate 155 moves with the upper tube 106. The valve plate 155 is annular in configuration, surrounds an exterior surface of the riser tube 135, and is axially moveable in relation thereto. The valve plate 155 is sealed against an interior surface of the upper tube 106 and an exterior surface of the riser tube 135. A substantially incompressible lubricant (e.g., oil) may be contained within a portion of the lower tube 111 filling a portion of the volume within the lower tube 111 below the valve plate 155. The remainder of the volume in the lower tube 111 may be filled with gas at atmospheric pressure.

During compression of fork 100, the gas in the interior volume of the lower tube 111 is compressed between the valve plate 155 and the upper surface of the lubricant as the upper tube 106 telescopically extends into the lower tube 111. The helically wound spring 115 is compressed between the top cap 181 and the flange 165, fixed relative to the lower tube 111. The volume of the gas in the lower tube 111 decreases in a nonlinear fashion as the valve plate 155, fixed relative to the upper tube 106, moves into the lower tube 111. As the volume of the gas gets small, a rapid build-up in pressure occurs that opposes further travel of the fork 100. The high pressure gas greatly augments the spring force of spring 115 proximate to the "bottom-out" position where the fork 100 is fully compressed. The level of the incompressible lubricant may be set to a point in the lower tube 111 such that the distance between the valve plate 155 and the level of the oil is substantially equal to a maximum desired travel of the fork 100.

Figures 2A-2C show sectional side elevation views of a needle-type monotube damping unit 200 in different stages of compression, according to one example embodiment. In one embodiment, the components included in damping unit 200 may be implemented as one half of fork 100. In another embodiment, damping unit 200 may be implemented as a portion of a shock absorber that includes a helically-wound, mechanical spring mounted substantially coaxially with the damping unit 200. In yet other embodiments, damping unit 200 may be implemented as a component of a vehicle suspension system where a spring component is mounted substantially in parallel with the damping unit 200.

As shown in Figure 2A, the damping unit 200 is positioned in a substantially fully extended position. The damping unit 200 includes a cylinder 202, a shaft 205, and a piston 266 fixed on one end of the shaft 205 and mounted telescopically within the cylinder 202. The outer diameter of piston 266 engages the inner diameter of cylinder 202. In one embodiment, the damping liquid (e.g., hydraulic oil or other viscous damping fluid) meters from one side to the other side of the piston 266 by passing through vented paths formed in the piston 266. Piston 266 may include shims (or shim stacks) to partially obstruct the vented paths in each direction (i.e., compression or rebound). By selecting shims having certain desired stiffness characteristics, the damping effects can be increased or decreased and damping rates can be different between the compression and rebound strokes of the piston 266. The damping unit 200 includes an annular floating piston 275 mounted substantially co-axially around a needle 201 and axially movable relative thereto. The needle 201 is fixed on one end of the cylinder 202 opposite the shaft 205. A volume of gas is formed between the floating piston 275 and the end of cylinder 202. The gas is compressed to compensate for motion of shaft 205 into the cylinder 202, which displaces a volume of damping liquid equal to the additional volume of the shaft 205 entering the cylinder 202.

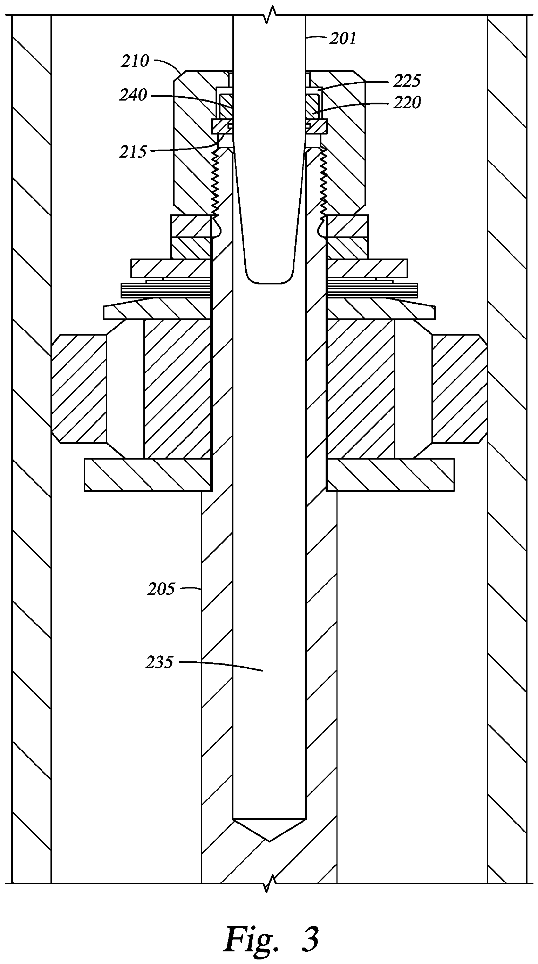

During compression, shaft 205 moves into the cylinder 202, causing the damping liquid to flow from one side of the piston 266 to the other side of the piston 266 within cylinder 202. Figure 2B shows the needle 201 and shaft 205 at an intermediate position as the damping unit 200 has just reached the "bottom-out" zone. In order to prevent the damping components from "bottoming out", potentially damaging said components, the damping force resisting further compression of the damping unit 200 is substantially increased within the "bottom-out" zone. The needle 201 (i.e., a valve member) compresses fluid in a bore 235, described in more detail below in conjunction with Figure 3, thereby drastically increasing the damping force opposing further compression of the damping unit 200. Fluid passes out of the bore around the needle through a valve that is restricted significantly more than the vented paths through piston 266. As shown in Figure 2C, the damping rate is increased substantially within the "bottom-out" zone until the damping unit 200 reaches a position where the damping unit 200 is substantially fully compressed.

Figure 3 shows a detailed view of the needle 201 and bore 235 at the intermediate position proximate to the "bottom-out" zone, according to one example embodiment. As shown in Figure 3, the needle 201 is surrounded by a check valve 220 contained within a nut 210 fixed on the end of shaft 205. During compression within the "bottom out" zone, the valve 220 is moved, by fluid pressure within the bore 235 and flow of fluid out of bore 235, upward against seat 225 of nut 210 and the bulk of escaping fluid must flow through the annular clearance 240 that dictates a rate at which the needle 201 may further progress into bore 235, thereby substantially increasing the damping rate of the damping unit 200 proximate to the "bottom-out" zone. The amount of annular clearance 240 between the exterior surface of the needle 201 and the interior surface of the valve 220 determines the additional damping rate within the "bottom-out" zone caused by the needle 201 entering the bore 235. In one embodiment, the needle 201 is tapered to allow easier entrance of the needle 201 into the bore 235 through valve 220.

During rebound within the "bottom out" zone, fluid pressure in the bore 235 drops as the needle 201 is retracted and fluid flows into the bore 235, causing the valve 220 to move toward a valve retainer clip 215 that secures the valve 220 within the nut 210. In one embodiment, the valve is castellated or slotted on the face of the valve 220 adjacent to the retainer clip 215 to prevent sealing the valve against the retainer clip 215, thereby forcing all fluid to flow back into the bore 235 via the annular clearance 240. Instead, the castellation or slot allows ample fluid flow into the bore 235 during the rebound stroke to avoid increasing the damping rate during rebound within the "bottom out" zone. The valve 220 is radially retained within the nut 210, which has a recess having a radial clearance between the interior surface of the recess and the exterior surface of the valve 220 that allows for eccentricity of the needle 201 relative to the shaft 205 without causing interference that could deform the components of damping unit 200.

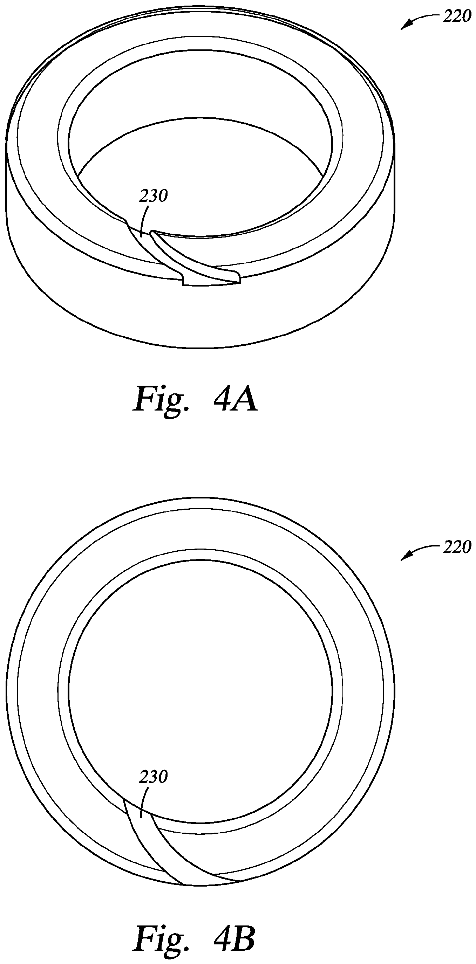

Figures 4A and 4B illustrate the castellated or slotted valve 220, according to one example embodiment. As shown in Figures 4A and 4B, the valve 220 is a washer or bushing having an interior diameter sized to have an annular clearance 240 between the interior surface of the valve 220 and the exterior surface of the needle 201 when the needle 201 passes through the valve 220. Different clearances 240 may be achieved by adjusting the interior diameter of the valve 220 in comparison to the diameter of the needle 201, which causes a corresponding change in the damping rate proximate to the "bottom-out" zone. A spiral face groove is machined into one side of the valve 220 to create the castellation or slot 230. It will be appreciated that the geometry of the slot 230 may be different in alternative embodiments and is not limited to the spiral design illustrated in Figures 4A and 4B. For example, the slot 230 may be straight (i.e., rectangular) instead of spiral, or the edges of the slot 230 may not be perpendicular to the face of the valve 220. In other words, the geometry of the slot 230 creates empty space between the surface of the retainer clip 215 and the surface of the valve 220 such that fluid may flow between the two surfaces.

When assembled, the valve 200 is oriented such that the side with the slot 230 is proximate to the upper face of the valve retainer clip 215, thereby preventing the surface of the valve 220 from creating a seal against the retainer clip 215. The slot 230 is configured to allow fluid to flow from cylinder 202 to bore 235 around the exterior surface of the valve 220, which has a larger clearance than the annular clearance 240 between the valve 220 and the needle 201. In one embodiment, two or more slots 230 may be machined in the face of the valve 220. In some embodiments, the valve 220 is constructed from high-strength yellow brass (i.e., a manganese bronze alloy) that has good characteristics enabling low friction between the valve 220 and the needle 201. In alternate embodiments, the valve 220 may be constructed from other materials having suitable characteristics of strength or coefficients of friction.

Figures 5A and 5B illustrate a damping unit 300 having a "piggy back" reservoir 350, according to another example embodiment. As shown in Figure 5A, damping unit 300, shown fully extended, includes a cylinder 302 with a shaft 305 and a piston 366 fixed on one end of the shaft 305 and mounted telescopically within the cylinder 302. Damping unit 300 also includes a needle 301 configured to enter a bore 335 in shaft 305. However, unlike damping unit 200, damping unit 300 does not include an annular floating piston mounted substantially co-axially around the needle 301 and axially movable relative thereto. Instead, the piggy back reservoir 350 includes a floating piston 375 configured to perform a similar function to that of floating piston 275. A volume of gas is formed between the floating piston 375 and one end of the piggy back reservoir 350. The gas is compressed to compensate for motion of shaft 305 into the cylinder 302. Excess damping liquid may enter or exit cylinder 302 from the piggy back reservoir 350 as the volume of fluid changes due to ingress or egress of shaft 305 from the cylinder 302. In Figure 5B, the damping unit 300 is shown proximate to the "bottom out" zone where needle 301 has entered bore 335.

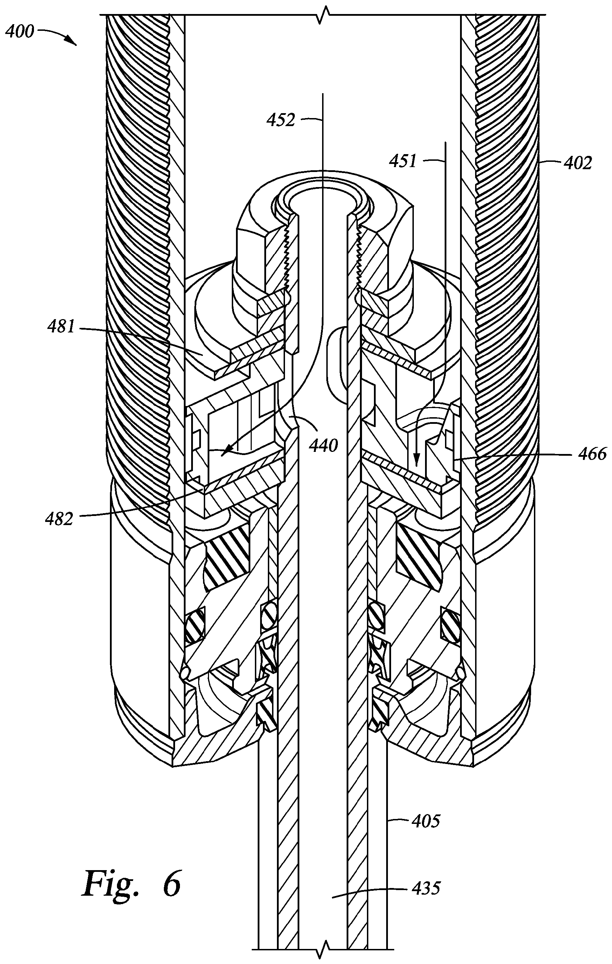

Figure 6 illustrates a half section, orthographic view of a damping unit 400, according to another example embodiment. As shown in Figure 6, damping unit 400 includes a piston 466 fixed on one end of a shaft 405 and mounted telescopically within a cylinder 402. The shaft 405 includes a bore 435 that enables ingress of a needle (e.g., 201, 301) to change the damping characteristics of the damping unit 400 proximate to the "bottom out" zone. The piston assembly includes a top shim stack 481 and a bottom shim stack 482 attached to the top face and bottom face of the piston 466, respectively, which enable different damping resistances to be set during the compression stroke and the rebound stroke. During operation, where a needle has not entered bore 435, the damping liquid flows from one side of the piston 466 to the other side through multiple flow paths 451, 452, and 453. In compression, a first flow path 451 (i.e., a damping flow path) allows the damping liquid to flow from an upper portion of the cylinder 402 through vented paths in the piston 466 and into a lower portion of the cylinder 402, forcing the bottom shim stack 482 away from the bottom face of the piston 466. A second flow path 452 (i.e., a bypass flow path) allows the damping liquid to flow from an upper portion of the cylinder 402 through the bore 435 and shaft ports 440 in shaft 405 and into additional vented paths in the piston 466 through the bottom shim stack 482 and into the lower portion of the cylinder 402. In rebound, a third flow path 453 (i.e., a rebound flow path, not shown in Figure 6) allows the damping liquid to flow from a lower portion of the cylinder 402, through different vented paths in the piston 466, through the top shim stack 481, and into an upper portion of the cylinder 402. In some embodiments, the first flow path 451 and the second flow path 452 may be associated with separate and distinct shim stacks. For example, the bottom shim stack 482 may be replaced by two shim stacks configured in a clover pattern and arranged such that a first shim stack covers the vented paths in the piston 466 corresponding to the first flow path 451 and a second shim stack covers the additional vented paths in the piston 466 corresponding to the second flow path 452.

When a needle just enters bore 435, the needle impedes the damping liquid in the upper portion of the cylinder 402 from flowing through the second flow path 452 due to the "plugging" effect of the needle blocking the entrance to the bore 435. However, the damping liquid may continue to pass through the piston 466 through the first flow path 451. In addition, some damping liquid may continue to flow out of ports 440 from bore 435 as the needle continues ingress into bore 435 and decreases the fluid volume inside the bore 435. It will be appreciated that the damping rate will increase as the needle blocks the second flow path 452, thereby forcing substantially all damping liquid in the upper portion of the cylinder 402 to move through piston 466 via the first flow path 451. At some point during ingress of the needle, the full diameter of the needle is adjacent to the shaft ports 440, substantially blocking additional damping liquid from leaving bore 435 through the shaft ports 440. Again, the damping rate will increase as the needle blocks the shaft ports 440 and fluid pressure rapidly builds up within bore 435 and acts on the needle to oppose any further compression of the damping unit 400.

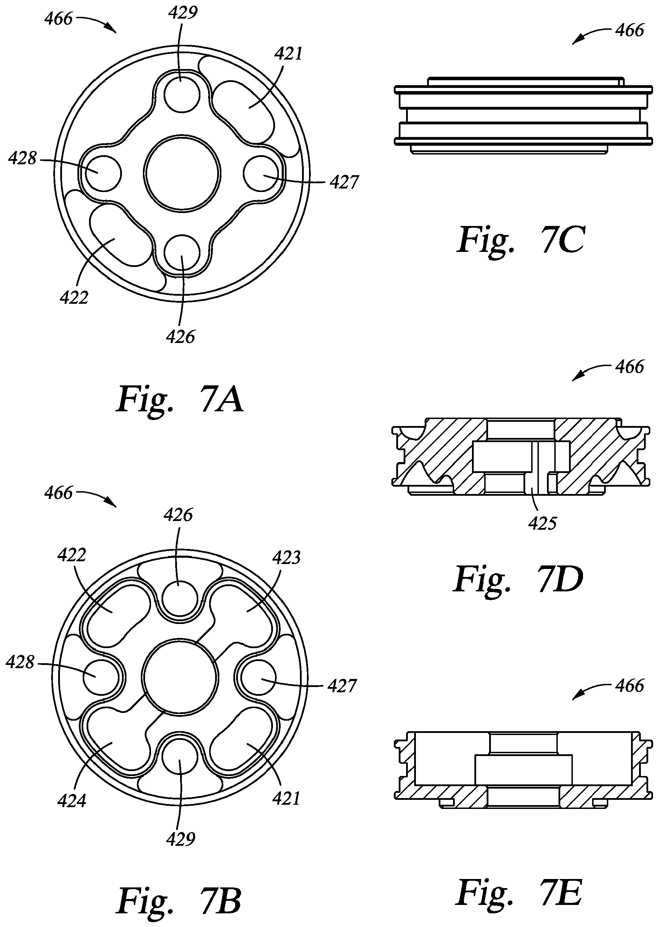

Figures 7A through 7E illustrate the piston 466 of Figure 6, according to one example embodiment. As shown in Figures 7A and 7B, the piston 466 includes two vented paths (i.e., 421, 422) that allow damping liquid to flow from the upper portion of the cylinder 402 to the lower portion of the cylinder 402 via the first flow path 451 (i.e., bypassing the top shim stack and entering the piston 466 proximate to the inner surface of cylinder 402). The piston 466 also includes two additional vented paths (i.e., 423, 424) that allow damping liquid to flow from the upper portion of the cylinder 402 to the lower portion of the cylinder 402 via the second flow path 452 (i.e, through the bore 435 and shaft ports 440). The additional vented paths are connected to the bore 435 via channels 425 that fluidly couple the additional vented paths to the shaft ports 440 in shaft 405 through a surface on the inner diameter of the piston 466. The four vented paths described above (i.e., 421-424) allow damping liquid to flow from an upper portion of the cylinder 402 to a lower portion of the cylinder 402 during a compression stroke. In rebound, yet another set of four vented paths (i.e., 426, 427, 428, 429) allow damping liquid to flow from the lower portion of the cylinder 402 to the upper portion of the cylinder 402 via the third flow path 453 (i.e., bypassing the bottom shim stack 482 and passing into the upper portion of the cylinder 402 through the top shim stack 481). Figure 7C shows a side view of the piston 466 of Figures 7A and 7B. Figure 7D shows a cross section of the piston 466 showing the inner diameter that is fit over shaft 405 as well as one channel 425 connected to one of the additional vented paths in the piston corresponding to the first second flow path 452. Figure 7E shows a cross section of the piston 466 showing vented paths 423 and 424.

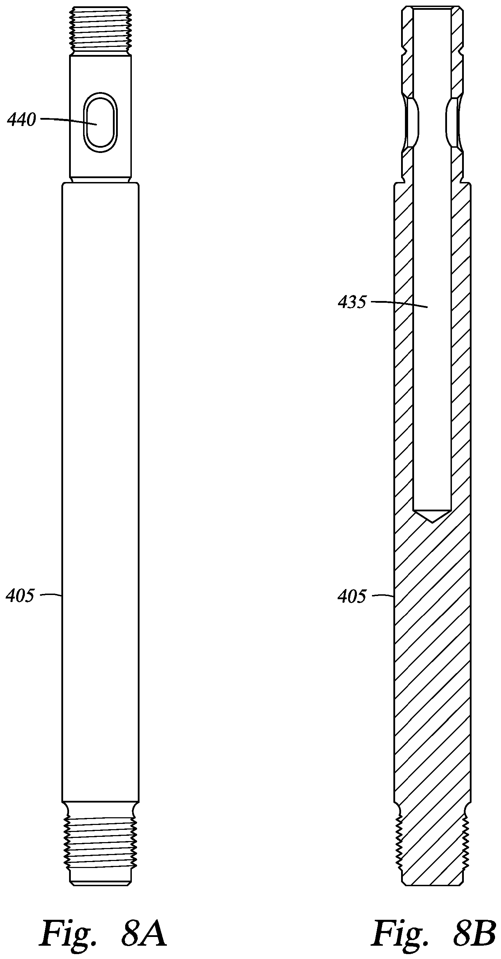

Figures 8A and 8B illustrate the shaft 405 of Figure 6, according to one example embodiment. As shown in Figures 8A and 8B, the shaft 405 includes a bore 435 formed (e.g., drilled, milled, etc.) into a top portion of the shaft. In one embodiment, the top portion of the shaft may have a smaller diameter than the body of the shaft 405, forming a seat a particular distance from one end of the shaft 405. The piston assembly including the piston 466 and the shim stacks may be mounted over the top portion of the shaft 405 and secured with a nut threaded onto the end of the shaft 405. In alternative embodiments, the nut may be press fit onto the shaft 405 or secured in any other technically feasible manner.

Shaft ports 440 may be formed through an outer face of the top portion of the shaft 405 proximate a surface on the inner diameter of the piston 466 when mounted on the shaft 405. The shaft ports 440 fluidly couple the bore 435 in the shaft 405 with the additional vented paths (i.e., 423, 424) in the piston 466 such that fluid may flow through the bore 435 via the second flow path 452. In other words, the second flow path 452 enables additional fluid to flow through the bottom shim stacks 482 when a needle is not blocking the bore 435.

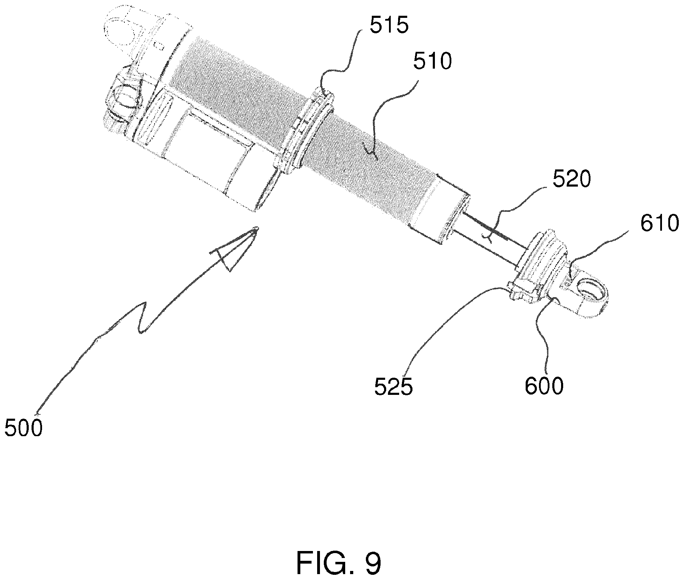

Figure 9 shows an embodiment of a shock absorber assembly 500 comprising an internal bypass damper. The shock absorber 500 includes a threaded body or cylinder 510 (having an adjustable threaded spring support 515 thereon), a piston rod or shaft 520, a lower eyelet assembly 600 including a lower spring support 525 and a damping adjustment lever 610.

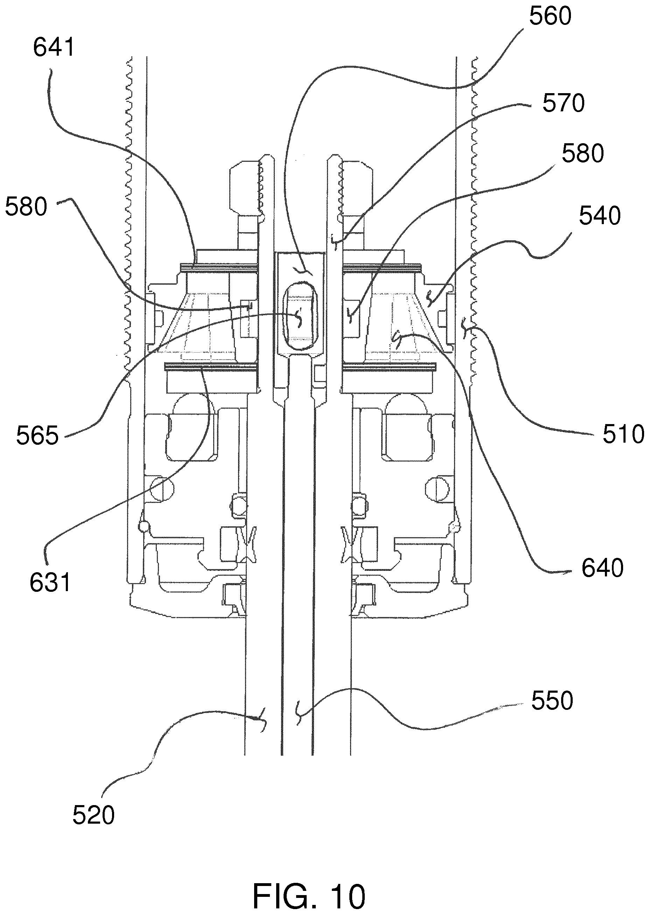

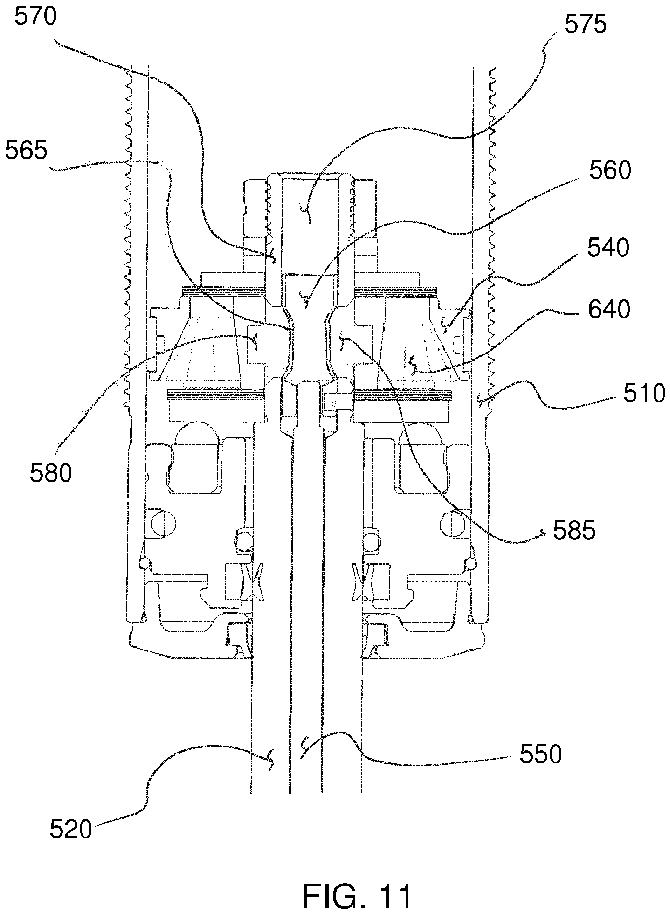

Figure 10 and Figure 11 show orthogonal sections through the same part of the shock 500. As shown a damping piston 540 is connected to an end of the piston rodpiston rod 520. Interior of the piston rod 520 is a control rod 550 which, when rotated, correspondingly rotates a valve 560. Alternatively the control rod 550 may be slidable longitudinally within the piston rod 520 to slide the valve 560 back and forward, rather than rotate it.

The valve 560 comprises a generally hollow cylindrical body that is open at one end to receive damping fluid from a valve recess 570 (described in greater detail below). The side wall of hollow cylindrical body is provided with two oppositely opposed passageways or ports 565 that are in fluid communication with the open end of the body, and through which damping fluid may flow in certain positions of the valve 560. The valve 560 is located within a valve recess 570 that is formed in one end of the piston piston rod 520. The valve recess 570 is open at one end to receive into its interior damping fluid from within the cylinder 510. Shaft windows 585 are provided in the side wall of the valve recess 570 that provide fluid communication between the interior of the valve recess 570 and an annular flow distributor 580 within the interior of the piston 540.

It is important to note that the valve 560 is in the same (open) position in both Figures 10 and 11, even though in the view of Figure 10, the passageways 565 are aligned with an axis perpendicular to the page and in Figure 11 the passageways 565 are aligned with the plane of the page. In both Figures 10 and 11 the passageways (or apertures) 565 of the valve 560 are aligned with the shaft windows 585 in the piston rod 520, thereby allowing fluid flow between the interior 575 (see Figure 11) of the valve recess 570 and the annular flow distributor 580. Looking at Figure 10, if the control rod 550 is rotated through ninety degrees the valve 560 is rotated by a corresponding amount so that the passageways 565 face a solid portion of the wall of valve recess 570 and as such the interior 575 of the valve recess 570 is closed to fluid communication with annular flow distributor 580.

In this way, the valve 560 is selectively movable between a first position in which, during compression of the shock 500, damping fluid may flow relatively freely through the interior 575 of the valve recess, into the valve 560, and out through the passageways 565 and shaft windows 585, and a second position in which damping fluid is obstructed from flowing along this path by the solid wall portion of the valve recess 570. The valve 560 may be positioned anywhere between the first and second positions, or at indexed positions therebetween, so as to provide a restriction to fluid flow, and thereby different damping characteristics for the shock 500.

It is important to note that, wherever the valve 560 is positioned, it is held in that position by the control rod 550 during use of the shock. This immobilization could be provided by friction between the control rod 550 and piston rod 520. This has the effect that the restriction provided by the valve 560 is not dependent on the damping fluid pressure generated during a compression. In other words, the size of the opening defined by the position of the valve 560 is not affected by the pressure of damping fluid as it fluctuates during compression/extension. Neither is there any threshold pressure to overcome before the valve 560 is operational: it remains in the position set by the user until further adjusted.

In another embodiment, the control rod 550 is caused to move during a compression stroke so that the valve 560 gradually moves from the first (open) position to the second (closed) position toward maximum compression or 'bottoming out'. This is a controlled movement as opposed to an uncontrolled movement caused by the pressure of damping fluid found in other designs of fluid bypass. Controlled movement of the valve 560 provides a position-sensitive damping function. The gradual movement may take place either across the whole compression stroke or only a part of it, for example the last one-third. Furthermore the gradual movement, or rate at which the valve closes, may be linear or non-linear. For example the rate of closure may increase toward the end of the compression. In one embodiment, the movement of the control rod 550 in this way may be achieved with a longitudinal groove or grooves provided on the surface of the control rod 550 in which one or more protrusion of the piston rod 520 is located. As the shock is compressed, action between the groove(s) and protrusion(s) causes the desired movement (e.g. rotation) of the control rod 550, and thereby the valve 560. It will be appreciated that the groove(s) could be provided on the interior of the piston rod 520 and the protrusion(s) provided on the control rod 550 to achieve a similar effect.

In other embodiments, adjustment of the control rod 550 is performed by a computer-controlled motor. The computer may have as inputs measured pressure of damping fluid in the cylinder and/or the position of the shock in the compression stroke, and the control rod 550 adjusted accordingly. When using the damping fluid pressure as an input, it is important to note that controlling the position according to a measured damping fluid pressure is functionally different to the valve 560 being opened and closed under direct influence of the pressure of damping fluid.

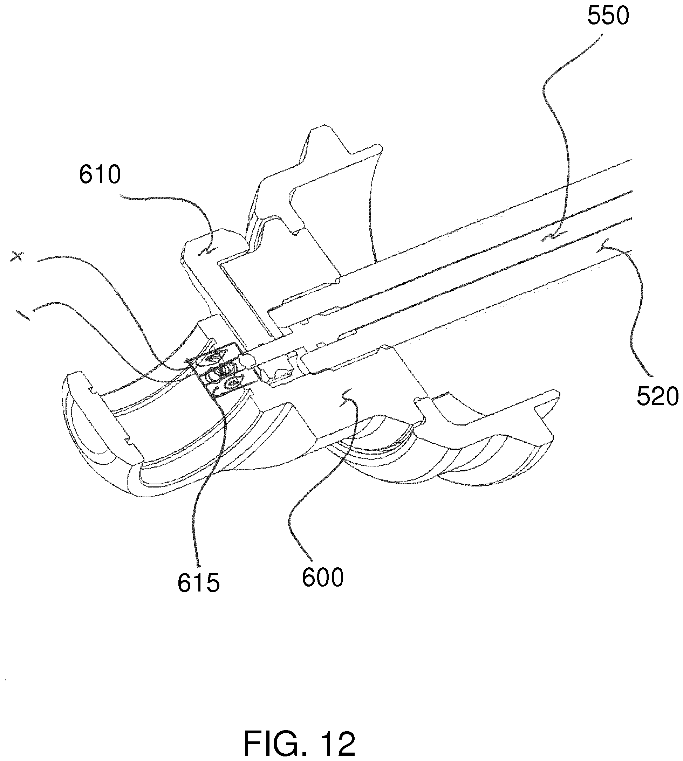

Figure 12 shows an embodiment of an eyelet assembly 600 as attached at an end of the piston rod 520 (opposite the piston 540) including a lever 610 rotationally fixed to and end of the control rod 550. When the lever 610 is rotated about the long axis of the rod 550, the rod 550 is correspondingly rotated which in turn rotates valve 560 and passages 565. Note that in lieu of or in addition to the lever 610, a motor 615 or other suitable motive device (labeled "motor") may be attached to rod 550 to provide rotation of rod 550 in response to electric or hydraulic (pneumatic) or other suitable input.

The lever 610 includes an indexing mechanism retaining it in intermediate positions between the lever slot walls 620 thereby proving "modal" damping adjustment selection. For example the lever 610 may have 3 "click in" positions corresponding to three desired damping stiffness's resulting from three rotational positions of valve 560 (via rod 550 and lever 610). In one embodiment the motor is an encoder and is capable of rotating the valve 560 to an effectively infinite number of positions between valve 560 full open and valve 560 full closed. As such the so equipped suspension (shock) may have a highly variable and selectable damping function that for example could be selected based on terrain or speed or other relevant driving factors. However, once selected, the damping selection is not changed by pressure variations in the shock caused by compression and extension during use.

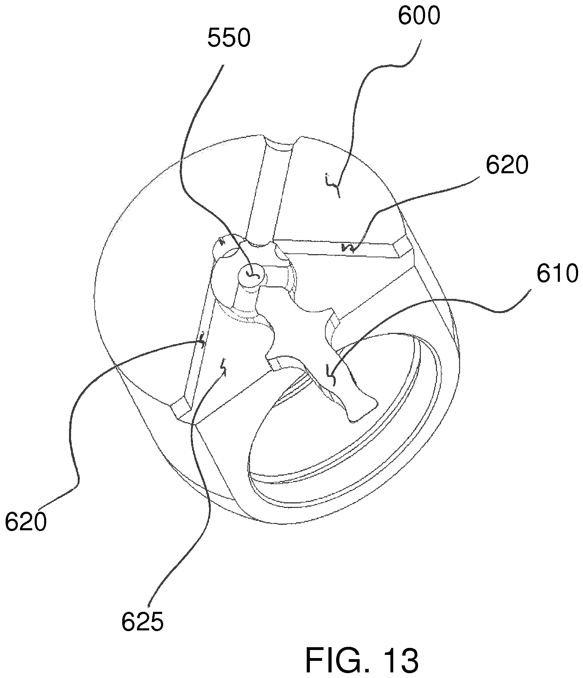

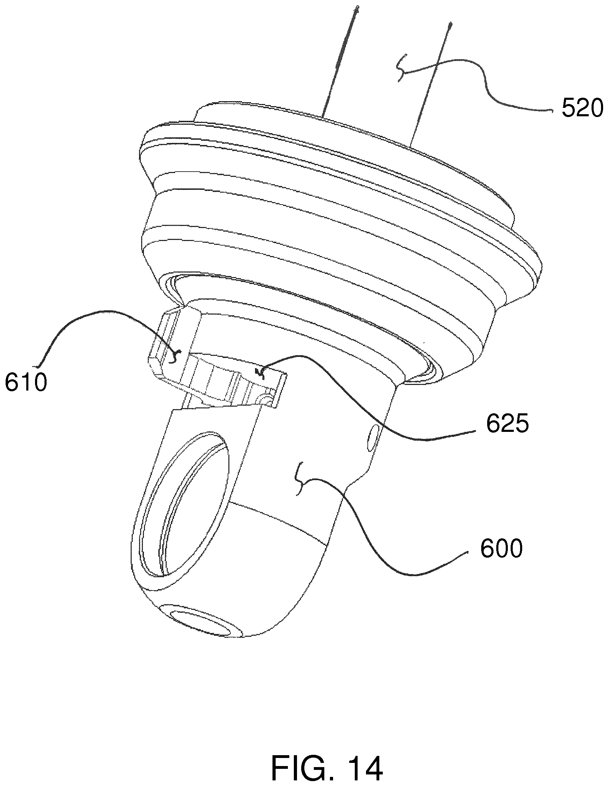

Figure 13 shows a cross section of eyelet 600 exposing the connection between lever 610 and rod 550 as well as the rotational travel limits for lever 610 that are provided by the walls 620 of the lever slot 625. Figure 14 shows another view of the eyelet assembly 600 showing the lever 610 within the lever slot 625.

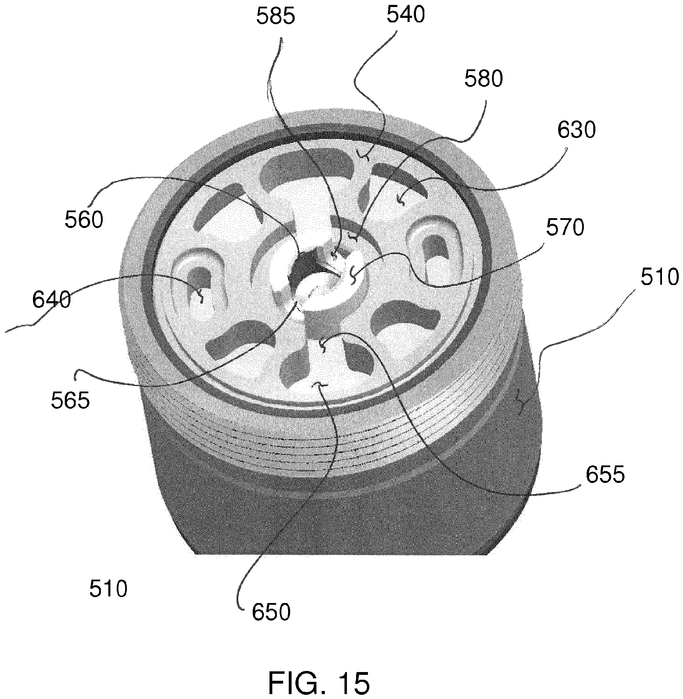

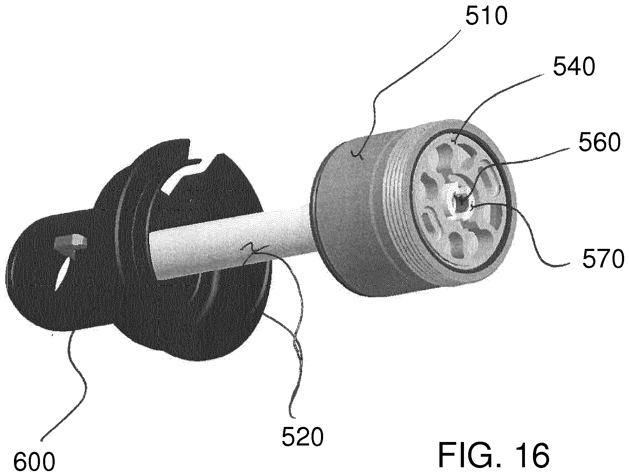

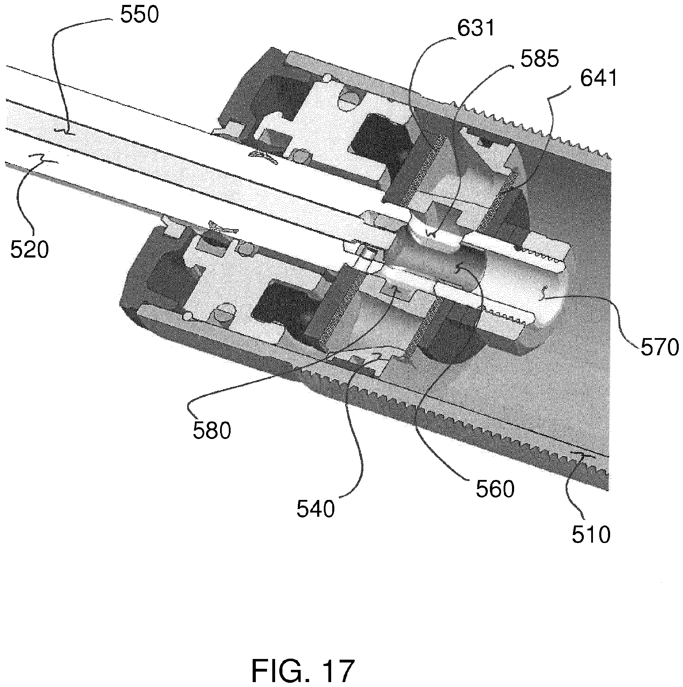

Figure 15 shows an embodiment, in cross section of the piston 540 and the threaded tube 510. As shown the piston 540 is mounted to the valve recess 570 (having shaft windows 585 as described above). Inside the valve recess 570 and coaxial therewith is shown the valve member 560 with passageways 565. The piston 540 includes typical compression ports 630 and rebound ports 640 (shims not shown in Figure 15, but visible in Fig. 10 as items 631 and 641), and also bypass ports 650 in fluid communication the annular distributor 580 via flow channels 655. Figure 16 shows the relationship between the threaded body 510, piston rod 520 and eyelet assembly 600. Figure 17 is a an additional view showing a configuration as in Figure 11 where passageways 565 are aligned with shaft windows 585 thereby allowing fluid communication from shaft interior 575 to annular flow distributor 580 and on to channels 655 and bypass ports 650 (see also Figure 15).

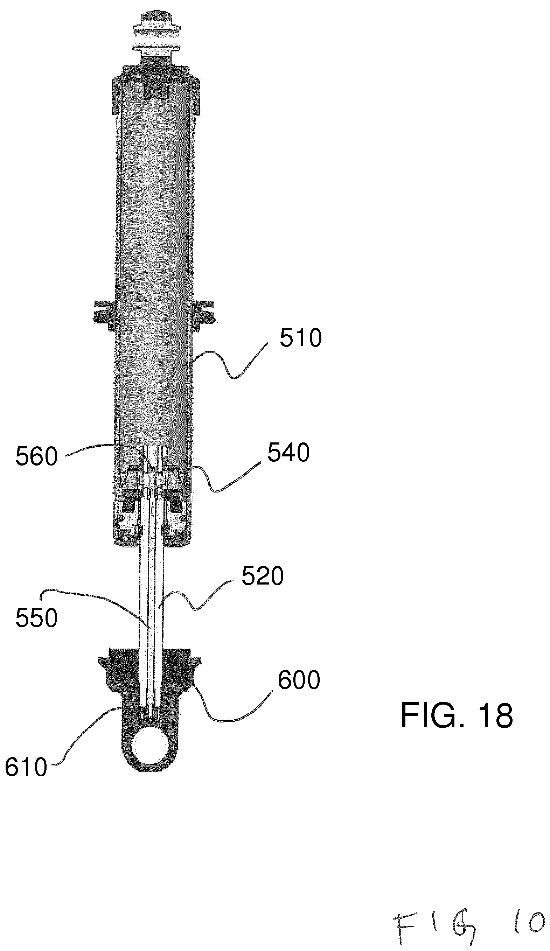

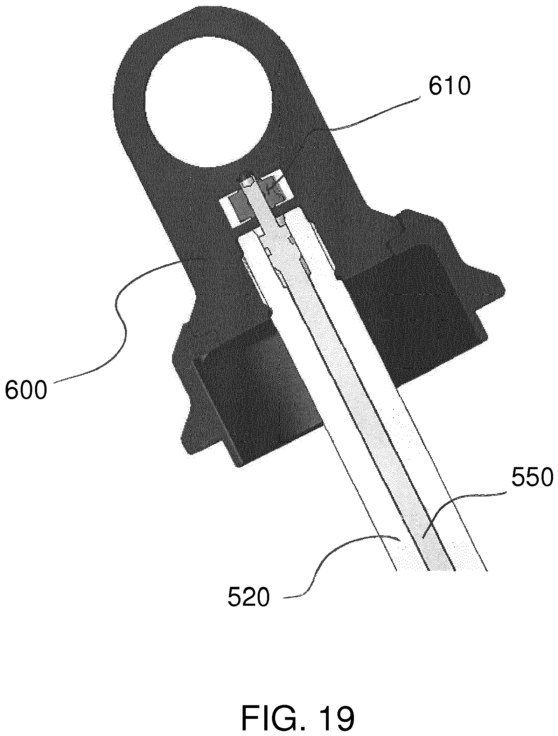

Figure 18 shows another embodiment of a shock absorber in section illustrating the related mechanisms therein. The same reference numerals have been used to indicate corresponding parts to the embodiment of Figures 9 to 17. The shock absorber of Figure 18 is of the monotube type and therefore does not have a "piggy-back" reservoir. Figure 19 shows a view of the lower eyelet assembly including lever 610 and connection to rod 550.

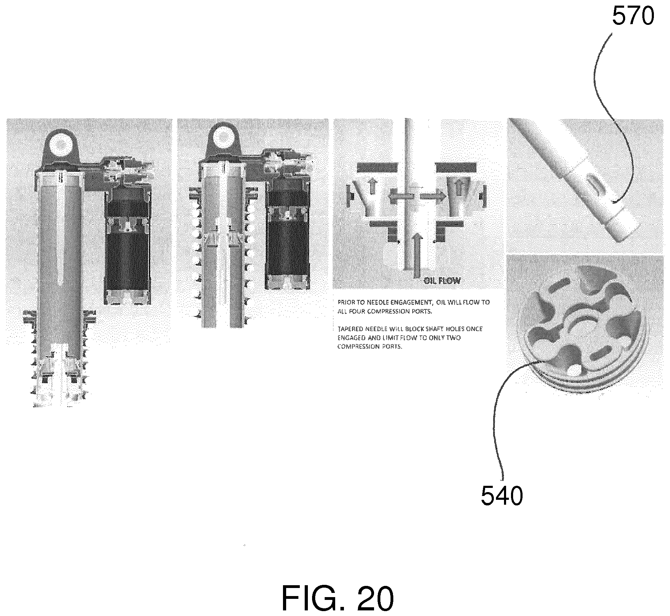

Figure 20 describes the operation of a simpler embodiment whereby windows (such as 585) are opened or closed by the respective excursion or incursion of a needle 660 (similar to the needle 301 of Figure 5A for example) during rebound or compression of the shock respectively. Note that in addition to the control feature described herein via rod 550 and valve 560 a needle may also be employed to provide a position sensitive damping function.

In one embodiment the shock absorber hereof includes the adjustment feature provided by valve 560 as well as the position sensitive feature as provided by a needle valve as described for example in the embodiments of Figures 2 to 8 above. Such a shock absorber would be stiffer with increased compression but such stiffness would begin or baseline from a pre-selected base damping level. In one embodiment a shock absorber hereof further includes an adjustable rebound shim preload of other suitable rebound damping adjuster.

In one embodiment, the shock absorber herein may be used on the front, rear or both of a four wheeled vehicle and the "motor" is connected to a circuit having sensors for any or all of vehicle roll, pitch and yaw. The circuit further includes a programmable processor for receiving sensor data and signaling the appropriate motor or motors (e.g. one each at each of the four vehicle "corners") to either open or close the piston valve (e.g. 560) to correspondingly soften or stiffen the respective shock absorber damping. One embodiment includes sensors for braking, accelerating, and / or turning. In one embodiment the motors are controlled by a switch in the cockpit of the so equipped vehicle. In one embodiment the switch or switches operate a circuit which supplies power to the motor or motors. In one embodiment the switch is wireless and sends a signal to a circuit which supplies power to the "motor." In one embodiment the switch is a personal computing device such as one including a cell phone (e.g. Apple iPhone or Android device). Other suitable motor control mechanisms may be employed.

## Claims

1. A vehicle suspension damper comprising:
a cylinder (202) containing a piston assembly comprising a piston rod (205) having a piston (266) attached to a first end of the piston rod;
a working fluid within the cylinder;
a needle (201) fixed to one end of the cylinder and configured to engage a blind bore (235) formed in the first end of the piston rod; and
a valve (220) located proximate to the first end of the piston rod and configured to surround the needle when the needle engages the blind bore, wherein the valve is configured to meter fluid forced out of the blind bore by the needle during compression through a clearance between an inner surface of the valve and an outer surface of the needle;
**characterized in that** a nut (210) is fixed to the first end of the piston rod, wherein the valve is retained within the nut by a retainer clip (215), the valve having substantial radial clearance between an outer surface of the valve and an inner surface of the nut such that the positioning of the valve may be eccentric compared with the positioning of the needle, wherein said nut comprises a seat (225) and said valve comprises a check valve, the arrangement being such that, in use, during compression when the needle enters said blind bore the check valve is moved, by fluid pressure within the blind bore and flow of working fluid out of blind bore, against the seat of the nut and the bulk of escaping fluid must flow through the clearance thereby dictating a rate at which the needle may further progress into bore, and substantially increasing the damping rate of the damper and wherein the valve is configured to meter fluid entering the blind bore during rebound through a slot (230) machined in a first surface of the valve oriented such that the side with the slot is proximate to an upper face of the valve retainer clip.

2. A vehicle suspension damper as claimed in claim 1,wherein said first surface of said valve is adjacent the retainer clip to prevent sealing the valve against the retainer clip.

3. A vehicle suspension damper as claimed in claims 1 or 2, wherein the valve is radially retained within the nut which has a recess, and said radial clearance is within said recess thereby allowing for eccentricity of the needle relative to the piston rod without causing interference that could deform components of the damper.

4. A vehicle suspension damper as claimed in claim 1 or 2, wherein the valve is an annular bushing constructed from a manganese bronze alloy, such as high-strength yellow brass or other material, enabling low friction between the valve and the needle.

5. A vehicle suspension damper as claimed in any preceding claim, wherein the valve comprises a washer or bushing having an interior diameter sized to provide said clearance between the inner surface of the valve and the outer surface of the needle when the needle passes through the valve.

6. A vehicle suspension damper as claimed in any preceding claim, wherein said needle is tapered to allow easier entrance of the needle into the blind bore through the valve.

7. A vehicle suspension damper as claimed in any preceding claim, wherein said piston comprises vented paths for metering working fluid flow from one side of the piston to the other side of the piston.

8. A vehicle suspension damper as claimed in claim 7, the arrangement being such that, in use, when said needle enters said blind bore the fluid flow around the needle and through the valve is restricted significantly more than fluid flow through the vented paths.

9. A vehicle comprising a vehicle suspension damper as claimed in any preceding claim.

## Patentansprüche

1. Fahrzeugaufhängungsdämpfer, umfassend:
einen Zylinder (202), der eine Kolbenanordnung enthält, die eine Kolbenstange (205) mit einem an einem ersten Ende der Kolbenstange befestigten Kolben (266) umfasst,
ein Arbeitsfluid in dem Zylinder,
eine Nadel (201), die an einem Ende des Zylinders fixiert ist und konfiguriert ist, um mit einem in dem ersten Ende der Kolbenstange ausgebildeten Sackloch (235) einzugreifen, und
ein Ventil (220), das in Nachbarschaft zu dem ersten Ende der Kolbenstange angeordnet ist und konfiguriert ist, um die Nadel zu umgeben, wenn die Nadel mit dem Sackloch eingreift, wobei das Ventil konfiguriert ist, um das durch die Nadel aus dem Sackloch gedrückte Fluid während der Kompression durch einen Zwischenraum zwischen einer Innenfläche des Ventils und einer Außenfläche der Nadel zu dosieren,
**dadurch gekennzeichnet, dass** eine Mutter (210) an dem ersten Ende der Kolbenstange fixiert ist, wobei das Ventil in der Mutter durch einen Halteclip (215) gehalten wird, wobei das Ventil einen im Wesentlichen radialen Zwischenraum zwischen einer Außenfläche des Ventils und einer Innenfläche der Mutter aufweist, sodass die Positionierung des Ventils exzentrisch im Vergleich zu der Positionierung der Nadel sein kann, wobei die Mutter einen Sitz (225) aufweist und das Ventil ein Rückschlagventil ist, wobei die Anordnung derart beschaffen ist, dass während der Kompression, wenn die Nadel in das Sackloch eintritt, das Rückschlagventil durch den Fluiddruck in dem Sackloch und den Fluss des Arbeitsfluids aus dem Sackloch gegen den Sitz der Mutter bewegt wird und der Großteil des austretenden Fluids durch den Zwischenraum fließen muss, wodurch die Rate, mit der die Nadel weiter in das Loch eindringen kann, vorgegeben wird und die Dämpfungsrate des Dämpfers wesentlich erhöht wird, und wobei das Ventil konfiguriert ist, um das durch das Sackloch eintretende Fluid während des Rückschlags durch einen Schlitz (230) zu dosieren, der in der ersten Fläche des Ventils ausgebildet und derart ausgerichtet ist, dass die Seite mit dem Schlitz einer oberen Fläche des Ventilhalteclips benachbart ist.

2. Fahrzeugaufhängungsdämpfer nach Anspruch 1, wobei die erste Fläche des Ventils dem Halteclip benachbart ist, um eine Abdichtung des Ventils gegen den Halteclip zu verhindern.

3. Fahrzeugaufhängungsdämpfer nach Anspruch 1 oder 2, wobei das Ventil radial in der Mutter, die eine Vertiefung aufweist, gehalten wird, wobei der radiale Zwischenraum in der Vertiefung vorgesehen ist, um eine Exzentrizität der Nadel relativ zu der Kolbenstange zu erlauben, ohne eine Behinderung, die Komponenten des Dämpfers verformen könnte, zu verursachen.

4. Fahrzeugaufhängungsdämpfer nach Anspruch 1 oder 2, wobei das Ventil eine ringförmige Buchse ist, die aus einer Manganbronzelegierung wie etwa einem Gelbmessing mit hoher Festigkeit oder einem anderen Material ausgebildet ist, um eine geringe Reibung zwischen dem Ventil und der Nadel vorzusehen.

5. Fahrzeugaufhängungsdämpfer nach einem der vorstehenden Ansprüche, wobei das Ventil eine Scheibe oder Buchse umfasst, deren Innendurchmesser dimensioniert ist, um den Zwischenraum zwischen der Innenfläche des Ventils und der Außenfläche der Nadel vorzusehen, wenn die Nadel durch das Ventil geht.

6. Fahrzeugaufhängungsdämpfer nach einem der vorstehenden Ansprüche, wobei sich die Nadel verjüngt, um einen einfacheren Eintritt der Nadel in das Sackloch durch das Ventil zu ermöglichen.

7. Fahrzeugaufhängungsdämpfer nach einem der vorstehenden Ansprüche, wobei der Kolben belüftete Pfade für das Dosieren des Arbeitsfluids von einer Seite des Kolbens zu der anderen Seite des Kolbens umfasst.

8. Fahrzeugaufhängungsdämpfer nach Anspruch 7, wobei die Anordnung derart beschaffen ist, dass in der Verwendung, wenn die Nadel in das Sackloch eintritt, der Fluidfluss um die Nadel herum und durch das Ventil wesentlich stärker beschränkt wird als der Fluidfluss durch die belüfteten Pfade.

9. Fahrzeug, das einen Fahrzeugaufhängungsdämpfer gemäß einem der vorstehenden Ansprüche umfasst.

## Revendications

1. Amortisseur de suspension de véhicule comprenant :
un cylindre (202) contenant un ensemble piston comprenant une tige de piston (205) ayant un piston (266) attaché à une première extrémité de la tige de piston ;
un fluide de travail au sein du cylindre ;
un pointeau (201) fixé à une extrémité du cylindre et configuré pour s'engager dans un alésage borgne (235) formé dans la première extrémité de la tige de piston ; et
une soupape (220) située à proximité de la première extrémité de la tige de piston et configurée pour entourer le pointeau lorsque le pointeau s'engage dans l'alésage borgne, dans lequel la soupape est configurée pour doser un fluide expulsé de l'alésage borgne par le pointeau pendant une compression à travers un jeu entre une surface interne de la soupape et une surface externe du pointeau ;
**caractérisé en ce qu'**un écrou (210) est fixé à la première extrémité de la tige de piston, dans lequel la soupape est retenue au sein de l'écrou par une attache de retenue (215), la soupape ayant un jeu radial substantiel entre une surface externe de la soupape et une surface interne de l'écrou de sorte que le positionnement de la soupape peut être excentrique comparé au positionnement du pointeau, dans lequel ledit écrou comprend un siège (225) et ladite soupape comprend un clapet antiretour, l'agencement étant tel que, en utilisation, pendant une compression lorsque le pointeau pénètre dans ledit alésage borgne, le clapet antiretour est déplacé, par la pression de fluide au sein de l'alésage borgne et l'écoulement du fluide de travail hors de l'alésage borgne, contre le siège de l'écrou et la plus grande partie du fluide s'échappant doit s'écouler à travers le jeu, dictant ainsi une vitesse à laquelle le pointeau peut continuer à progresser dans l'alésage, et augmentant sensiblement le degré d'amortissement de l'amortisseur et dans lequel la soupape est configurée pour doser le fluide entrant dans l'alésage borgne pendant un rebond à travers une fente (230) usinée dans une première surface de la soupape orientée de telle sorte que le côté avec la fente est proche d'une face supérieure de l'attache de retenue de soupape.

2. Amortisseur de suspension de véhicule selon la revendication 1, dans lequel ladite première surface de ladite soupape est adjacente à l'attache de retenue pour empêcher le scellement de la soupape contre l'attache de retenue.

3. Amortisseur de suspension de véhicule selon les revendications 1 ou 2, dans lequel la soupape est retenue radialement au sein de l'écrou qui comporte un renfoncement, et ledit jeu radial se trouve au sein dudit renfoncement, permettant ainsi une excentricité du pointeau par rapport à la tige de piston sans amener d'interférence qui pourrait déformer des composants de l'amortisseur.

4. Amortisseur de suspension de véhicule selon la revendication 1 ou 2, dans lequel la soupape est une bague annulaire construite à partir d'un alliage de bronze au manganèse, tel que le laiton jaune à haute résistance ou un autre matériau, permettant un faible frottement entre la soupape et le pointeau.

5. Amortisseur de suspension de véhicule selon une quelconque revendication précédente, dans lequel la soupape comprend une rondelle ou une bague ayant un diamètre intérieur dimensionné pour assurer ledit jeu entre la surface interne de la soupape et la surface externe du pointeau lorsque le pointeau passe à travers la soupape.

6. Amortisseur de suspension de véhicule selon une quelconque revendication précédente, dans lequel ledit pointeau est effilé pour permettre une entrée plus facile du pointeau dans l'alésage borgne à travers la soupape.

7. Amortisseur de suspension de véhicule selon une quelconque revendication précédente, dans lequel ledit piston comprend des voies ventilées pour doser l'écoulement de fluide de travail d'un côté du piston à l'autre côté du piston.

8. Amortisseur de suspension de véhicule selon la revendication 7, l'agencement étant tel que, en utilisation, lorsque ledit pointeau entre dans ledit trou borgne, l'écoulement de fluide autour du pointeau et à travers la soupape est limité de manière plus significative que l'écoulement de fluide à travers les voies ventilées.

9. Véhicule comprenant un amortisseur de suspension de véhicule selon une quelconque revendication précédente.
